# EUROPÄISCHE PATENTSCHRIFT

(11) **EP 3 509 911 B1**
(45) Veröffentlichungstag und Bekanntmachung des Hinweises auf die Patenterteilung: **25.03.2020**
(21) Anmeldenummer: 18782341.4
(22) Anmeldetag: 24.09.2018
(51) Int. Cl.: B60R 13/02, B60Q 3/20

(54) **DEKORTEIL FÜR EINEN FAHRZEUGINNENRAUM UND VERFAHREN ZUM HERSTELLEN EINES SOLCHEN FORMTEILS**
TRIM PART FOR A VEHICLE INTERIOR AND METHOD FOR PRODUCING SUCH A MOULDED PART
PIÈCE DÉCORATIVE POUR HABITACLE DE VÉHICULE ET PROCÉDÉ DE FABRICATION D'UNE PIÈCE MOULÉE DE CE TYPE

(30) Priorität: 27.09.2017 DE 102017122429
(43) Veröffentlichungstag der Anmeldung: 17.07.2019
(73) Patentinhaber: Novem Car Interior Design GmbH, 95519 Vorbach (DE)
(72) Erfinder: WEIH, Philipp, 95448 Bayreuth (DE)
(74) Vertreter: Schlögl, Markus
(86) Internationale Anmeldenummer: PCT/EP2018/075806
(87) Internationale Veröffentlichungsnummer: WO 2019/063483

(56) Entgegenhaltungen:
- DE-A1- 10 313 068
- DE-A1-102012 023 135
- DE-U1-202015 106 328
- US-A1- 2012 320 615

## Beschreibung

Die Erfindung betrifft ein Formteil, insbesondere ein als Formteil ausgebildetes Dekorteil und/oder Verkleidungsteil für einen Fahrzeuginnenraum und ein Verfahren zum Herstellen eines solchen Formteils.

Aus DE 20 2015 106 546 U1 ist ein als Formteil ausgebildetes Dekor und/oder Verkleidungsteile für einen Fahrzeuginnenraum bekannt, umfassend eine Dekorschicht mit einer transparenten Lackschicht und einer an der Rückseite der Lackschicht vorgesehenen Dekorlage, beispielsweise ein Holz, insbesondere ein Holzfurnier, und/oder eine Folie und/oder ein Gewebe und/oder ein Metall und/oder ein Verbundwerkstoff, insbesondere Carbon. An der Rückseite der Dekorlage wiederum ist ein Träger angeordnet. Ferner ist eine Lichtquelle zum Beleuchten und/oder Durchleuchten der Lackschicht vorgesehen, wobei von der Lichtquelle ausgehendes Licht seitlich in die Lackschicht eingekoppelt wird.

Zum Stand der Technik wird ferner verwiesen auf DE 10 2012 023 135 A1, DE 103 13 068 A1, US 2012/320615 A1 und DE 20 2015 106 328 U1.

Nachteilig bei derartigen Formteilen ist, dass das Licht beim Weitertransport in der Lackschicht zumindest teilweise an der Dekorlage absorbiert und somit abgeschwächt wird. Auch kann es zu unerwünschter Lichtstreuung an der Dekorlage kommen. Eine gleichmäßige Lichtverteilung in Formteilen, insbesondere in großflächigen Formteilen, erweist sich somit als problematisch. Das Erscheinungsbild der erleuchteten Sichtseite ist vom Abstand von der Lichtquelle abhängig und kann durch unerwünschte Streueffekten an der Dekorlage beeinflusst sein.

Der Erfindung liegt die Aufgabe zu Grunde, ein neues Formteil anzugeben, insbesondere ein vollflächig beleuchtetes Formteil, bei dem das Erscheinungsbild der Sichtseite nicht durch weitere Komponenten des Formteils, beispielsweise die Dekorlage, negativ beeinflusst wird. Ferner liegt der Erfindung die Aufgabe zu Grunde, ein neues Verfahren zum Herstellen eines solchen Formteils anzugeben.

Diese Aufgabe wird hinsichtlich des Formteils gelöst durch die Merkmale des Anspruchs 1 und hinsichtlich des Verfahrens zum Herstellen eines Formteils durch die Merkmale des Anspruchs 10. Vorteilhafte Ausgestaltungen und Weiterbildungen sind in den jeweils abhängigen Ansprüchen angegeben.

Das erfindungsgemäße Formteil umfasst eine Dekorschicht und einen an einer Rückseite der Dekorschicht angeordneten Träger, insbesondere einen Kunststoffträger. Die Dekorschicht wiederum umfasst eine Dekorlage und eine lichtleitende, insbesondere transparente, Optikschicht mit einem ersten Brechungsindex. Die Optikschicht ist an einer als Sichtseite ausgebildeten Vorderseite der Dekorschicht angeordnet ist. Bei der Optikschicht kann es sich beispielsweise um eine Glasoptikschicht handeln.

Weiter ist wenigstens eine Lichtquelle zum Beleuchten und/oder Durchleuchten der Optikschicht am oder im Formteil vorgesehen. Die Lichtquelle ist derart angeordnet, dass von der Lichtquelle ausgehendes Licht direkt und/oder indirekt seitlich in die Optikschicht eingekoppelt wird.

Beim erfindungsgemäßen Formteil ist ferner in der Dekorschicht zwischen der Dekorlage und der Optikschicht, angrenzend an die Optikschicht, eine lichtleitende, insbesondere transparente, Zusatzschicht 17 mit einem zweiten Brechungsindex vorgesehen ist. Der erste Brechungsindex der Optikschicht ist größer als der zweite Brechungsindex der Zusatzschicht.

Die Vorteile der Erfindung ergeben sich insbesondere aus den Brechungsindexunterschied zwischen Optikschicht und Zusatzschicht. Dieser Brechungsindexunterschied bewirkt eine Totalreflexion für Lichtstrahlen in der Optikschicht, an der Grenzfläche zur Zusatzschicht, sofern der Einfallwinkel (Winkel zur Flächennormalen) der Lichtstrahlen an der Grenzfläche einen bestimmten Wert, nämlich den vom Brechungsindexunterschied abhängigen Grenzwinkel der Totalreflexion, überschreitet. Ein Lichtstrahl tritt dann nicht in die Zusatzschicht ein, sondern wird nahezu vollständig reflektiert und verbliebt somit in der Optikschicht. Unterhalb dieses Grenzwinkels wir nur noch ein Teil der Strahlung an der Grenzfläche reflektiert und bleibt in der Optikschicht, der restliche Teil tritt in die Zusatzschicht ein.

Die Zusatzschicht mit ihrem kleineren Brechungsindex sorgt somit dafür, dass das Licht nicht oder zumindest in geringerem Umfang von den darunterliegenden Schichten, beispielsweise der Dekorlage, absorbiert wird (im Vergleich zum Nichtvorsehen dieser Zusatzschicht). Auf diese Weise kann sich das seitlich eingestrahlte Licht aufgrund der Reflexion an den Grenzflächen der Optikschicht deutlich weiter oder über längere Distanzen mit zumindest nahezu gleichbleibender Lichtstärke in der Optikschicht ausbreiten als bei einem Formteil ohne derartige Zusatzschicht. Dadurch sind Formteile mir großflächigeren Sichtseiten möglich, die sich nahezu gleichmäßig durch seitliches Lichteinstrahlen beleuchten lassen.

Eine Weiterbildung der Erfindung sieht vor, dass zwischen Optikschicht und Zusatzschicht oder in der Zusatzschicht lichtstreuende Störstellen vorgesehen sind. Diese sind vorzugsweise derart ausgebildet, dass von der Lichtquelle ausgehendes Licht zumindest teilweise derart gestreut wird, dass dieses Licht an der als Sichtseite ausgebildeten Vorderseite der Dekorschicht aus der Optikschicht ausgekoppelt wird. Auf diese Weise lassen sich beispielsweise leuchtende Symbole an der Sichtseite darstellen.

Die Störstellen können als durchgehende Ausnehmungen in der Zusatzschicht ausgebildet sein. Unter "durchgehend" wird hierbei die Erstreckung über die gesamte Dicke der Zusatzschicht verstanden. Mit anderen Worten: Die Ausnehmung ist ein Loch durch die Zusatzschicht hindurch. Die Ausnehmungen sind bestimmt zur Durchleitung von Licht von der Optikschicht zur Dekorlage und umgekehrt.

Die Ausnehmungen in der Zusatzschicht können beispielsweise mit dem Material der Optikschicht gefüllt sein.

Die Zusatzschicht kann beispielsweise eine Druckschicht oder eine Folie oder eine Lackschicht sein oder umfassen.

An der Rückseite der Zusatzschicht kann eine lichtstreuende und/oder lichtabsorbierende Zwischenschicht vorgesehen sein. Die Zwischenschicht kann beispielsweise als Druckschicht und/oder als Farbschicht ausgebildet sein.

Die Störstellen können derart angeordnet und/oder ausgebildet, insbesondere geformt sein, dass ihre Anordnung und/oder Form einem an der als Sichtseite ausgebildeten Vorderseite der Dekorschicht darzustellenden Symbol entspricht.

Die Lichtquelle kann seitlich an der Optikschicht vorgesehen, insbesondere angebracht sein. Es ist aber auch möglich, dass mindestens ein Lichtleiter vorgesehen ist, dessen eines Ende seitlich an der Optikschicht endet und dessen anderes Ende an der Lichtquelle endet, wobei die Lichtquelle vorzugsweise an der Rückseite des Trägers vorgehsehen, insbesondere angebracht ist.

Die Dekorlage kann ein, vorzugsweise lichtundurchlässiges, Holzfurnier oder eine, vorzugsweise lichtundurchlässiges, Folie sein oder umfassen. Die Optikschicht kann PUR und/oder PMMA und/oder PC aufweisen oder aus PUR und/oder PMMA und/oder PC gebildet sein.

Das erfindungsgemäße Verfahren zum Herstellen eines erfindungsgemäßen Formteils umfasst die Schritte:
- Bereitstellen eines zur Bildung der Dekorlage der Dekorschicht des Formteils vorhergesehenen Materials, insbesondere eines Holzfurniers oder einer Folie,
- Aufbringen der Zusatzschicht auf die Vorderseite der Dekorlage,
- Vorsehen mindestens einer Störstelle in der Reflexionsschicht durch Einbringen einer Ausnehmung, vorzugsweise mittels Laserabtrag, in die Zusatzschicht,
- Aufbringen, insbesondere Aufgießen, der Optikschicht auf die Zusatzschicht,
- Hinterspritzen des zur Bildung der Dekorschicht vorgesehenen Materials mittels Spritzgießen mit einem Trägermaterial, insbesondere einem Kunststoff, zum Ausbilden des Trägers,
- Vorsehen wenigstens einer Lichtquelle am oder im Formteil.

Ergänzend kann vorgesehen sein, dass eine lichtstreuende und/oder lichtabsorbierende Zwischenschicht auf die Vorderseite der Dekorlage aufgebracht, insbesondere aufgedruckt, wird, bevor die Zusatzschicht auf die Vorderseite der Dekorlage und/oder der Zwischenschicht aufgebracht wird.

Die Störstellen können derart angeordnet und/oder geformt werden, dass sie einem an der als Sichtseite ausgebildeten Vorderseite der Dekorschicht darzustellenden Symbol entsprechen.

Die Lichtquelle kann seitlich an der Optikschicht vorgesehen, insbesondere angebracht werden.

Alternativ kann mindestens ein Lichtleiter vorgesehen, insbesondere angebracht werden, dessen eines Ende seitlich an der Optikschicht endet und dessen anderes Ende an der Lichtquelle endet, wobei die Lichtquelle vorzugsweise an der Rückseite des Trägers vorgesehen, insbesondere angebracht wird.

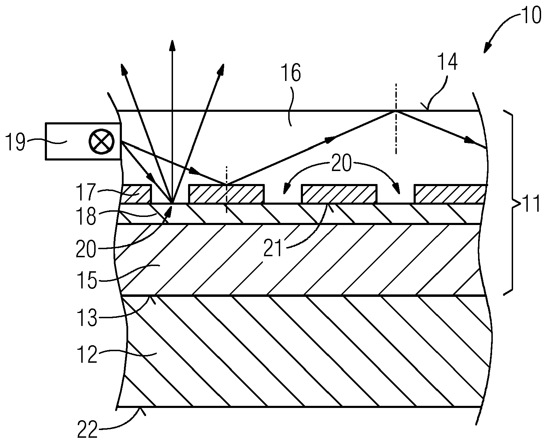

Die Erfindung wird nachstehend auch hinsichtlich weiterer Merkmale und Vorteile anhand der Beschreibung von Ausführungsbeispielen und unter Bezugnahme auf die beiliegende, schematische Zeichnung näher erläutert. Die Figur zeigt einen Ausschnitt einer schematischen Querschnittsdarstellung eines ersten Ausführungsbeispiels eines erfindungsgemäßen Formteils. Einander entsprechende Teile und Komponenten sind jeweils mit den gleichen Bezugszeichen bezeichnet.

Die Figur zeigt ein als Formteil 10 ausgebildetes Dekorteil oder Verkleidungsteil für einen Fahrzeuginnenraum, umfassend eine Dekorschicht 11 und einen Träger 12, beispielsweise einen Kunststoffträger, an einer Rückseite 13 der Dekorschicht 11.

Die Dekorschicht 11 umfasst zum einen eine Dekorlage 15 und zum anderen eine transparente Optikschicht 16, beispielsweise eine Glasoptikschicht, an einer als Sichtseite ausgebildeten Vorderseite 14 der Dekorschicht 11.

Seitlich an der Optikschicht 16 ist eine Lichtquelle 19 zum Beleuchten und/oder Durchleuchten der Optikschicht 16 am oder im Formteil 10 angebracht, wobei von der Lichtquelle 19 ausgehendes Licht seitlich in die Optikschicht 16 eingekoppelt wird.

In der Dekorschicht ist zwischen der Dekorlage 15 und der Optikschicht 16 eine transparente Zusatzschicht 17 angeordnet.

Die transparente Optikschicht 16 weist einen ersten Brechungsindex auf, die Zusatzschicht 17 einen zweiten Brechungsindex, wobei der erste Brechungsindex größer als der zweite Brechungsindex ist. Dies ermöglicht eine Totalreflexion des von der Lichtquelle 19 ausgehenden und in die Optikschicht 16 eingekoppelten Lichts an der Grenzfläche zur Zusatzschicht 17, sofern der Einfallwinkel (Winkel zur Flächennormalen) der Lichtstrahlen an der Grenzfläche einen bestimmten Wert, nämlich den vom Brechungsindexunterschied abhängigen Grenzwinkel der Totalreflexion, überschreitet. Das totalreflektierte Licht verbleibt dann in der Optikschicht 16 und wird in dieser zumindest nahezu verlustfrei weitertransportiert.

Die Zusatzschicht 17 weist als durchgehende Ausnehmungen ausgebildete Störstellen 20 auf, an denen von der Lichtquelle 19 ausgehendes Licht gestreut wird und unter anderem an der als Sichtseite ausgebildeten Vorderseite 14 der Dekorschicht 11 aus der Optikschicht 16 ausgekoppelt wird. Hierzu wird das Licht durch die Ausnehmungen 20 hindurch geleitet und an einer lichtstreuenden Zwischenschicht 18 gestreut, die an der Rückseite 21 der Zusatzschicht 17, unter anderem angrenzend an die Ausnehmungen 20, vorgesehen ist. Auf diese Weise lassen sich beispielsweise leuchtende Symbole darstellen. Alternativ kann die Zwischenschicht 18 auch entfallen, die Streuung kann dann der Dekorlage 15 erfolgen. Die Pfeile in der Optikschicht 16 zeigen schematisch, wie das Licht zum einen durch Totalreflexion an der Grenzfläche zur Zusatzschicht 17 durch die Optikschicht 16 geleitet wird und zum anderen in den Störstellen 20 gestreut und auf diese Weise aus der Optikschicht 16 ausgekoppelt wird.

Die Zusatzschicht 17 kann eine Druckschicht sein, die Dekorlage 15 ein lichtundurchlässiges Holzfurnier, und die Optikschicht 16 kann aus PUR gebildet sein. Die Zwischenschicht 18 kann als Druckschicht ausgebildet sein.

Die Störstellen 20 sind derart angeordnet, dass sie in ihrer Gesamtheit einem an der als Sichtseite ausgebildeten Vorderseite 14 der Dekorschicht 11 darzustellendem Symbol entsprechen.

### Bezugszeichenliste

- 10: Formteil
- 11: Dekorschicht
- 12: Träger
- 13: Rückseite der Dekorschicht 11
- 14: Vorderseite der Dekorschicht 11
- 15: Dekorlage
- 16: Optikschicht
- 17: Zusatzschicht
- 18: Zwischenschicht
- 19: Lichtquelle
- 20: Störstelle
- 21: Rückseite der Zusatzschicht 17
- 22: Rückseite des Trägers 12

## Patentansprüche

1. Formteil (10), insbesondere als Formteil ausgebildetes Dekorteil oder Verkleidungsteil für einen Fahrzeuginnenraum, umfassend eine Dekorschicht (11) und einen an einer Rückseite (13) der Dekorschicht (11) angeordneten Träger (12), wobei die Dekorschicht (11) eine Dekorlage (15) und eine lichtleitende Optikschicht (16) mit einem ersten Brechungsindex umfasst,
wobei die Optikschicht (16) an einer als Sichtseite ausgebildeten Vorderseite (14) der Dekorschicht (11) angeordnet ist,
wobei wenigstens eine Lichtquelle (19) zum Beleuchten und/oder Durchleuchten der Optikschicht (16) am oder im Formteil (10) vorgesehen ist,
wobei die Lichtquelle (19) derart angeordnet ist, dass von der Lichtquelle (19) ausgehendes Licht direkt und/oder indirekt seitlich in die Optikschicht (16) eingekoppelt wird,
**dadurch gekennzeichnet,**
**dass** in der Dekorschicht (11) zwischen der Dekorlage (15) und der Optikschicht (16), angrenzend an die Optikschicht (16), eine lichtleitende Zusatzschicht (17) mit einem zweiten Brechungsindex vorgesehen ist,
wobei der erste Brechungsindex der Optikschicht (16) größer als der zweite Brechungsindex der Zusatzschicht (17) ist.

2. Formteil nach Anspruch 1,
**dadurch gekennzeichnet, dass**
zwischen Optikschicht (16) und Zusatzschicht (17) oder in der Zusatzschicht (17) lichtstreuende Störstellen (20) vorgesehen sind.

3. Formteil nach Anspruch 1,
**dadurch gekennzeichnet, dass**
die Störstellen (20) als durchgehende Ausnehmungen in der Zusatzschicht (17) ausgebildet sind.

4. Formteil nach Anspruch 3,
**dadurch gekennzeichnet, dass**
die Ausnehmungen mit dem Material der Optikschicht gefüllt sind.

5. Formteil nach einem der vorhergehenden Ansprüche,
**dadurch gekennzeichnet, dass**
die Zusatzschicht (17) eine Druckschicht oder eine Folie oder eine Lackschicht ist oder umfasst.

6. Formteil nach einem der vorhergehenden Ansprüche,
**dadurch gekennzeichnet, dass**
an der Rückseite (21) der Zusatzschicht (17) eine lichtstreuende und/oder lichtabsorbierende Zwischenschicht (18) vorgesehen ist.

7. Formteil nach einem der vorhergehenden Ansprüche,
**dadurch gekennzeichnet, dass**
die Störstellen (20) derart angeordnet und/oder ausgebildet sind, dass ihre Anordnung und/oder Form einem an der als Sichtseite ausgebildeten Vorderseite (14) der Dekorschicht (11) darzustellenden Symbol entspricht.

8. Formteil nach einem der vorhergehenden Ansprüche,
**dadurch gekennzeichnet,**
**dass** die Lichtquelle (19) seitlich an der Optikschicht (16) vorgesehen ist, oder
**dass** mindestens ein Lichtleiter vorgesehen ist, dessen eines Ende seitlich an der Optikschicht (16) endet und dessen anderes Ende an der Lichtquelle (19) endet, wobei die Lichtquelle (19) vorzugsweise an der Rückseite (22) des Trägers (12) vorgehsehen ist.

9. Formteil nach einem der vorhergehenden Ansprüche
**dadurch gekennzeichnet,**
**dass** die Dekorlage (15) ein Holzfurnier oder eine Folie ist oder umfasst,
und/oder
**dass** die Optikschicht (16) PUR und/oder PMMA und/oder PC aufweist oder aus PUR und/oder PMMA und/oder PC gebildet ist.

10. Verfahren zum Herstellen eines Formteils (10) nach einem der vorhergehenden Ansprüche umfassend die Schritte:
- Bereitstellen eines zur Bildung der Dekorlage (15) der Dekorschicht (11) des Formteils (11) vorhergesehenen Materials,
- Aufbringen der Zusatzschicht (17) auf die Vorderseite der Dekorlage (15),
- Vorsehen mindestens einer Störstelle (20) in der Reflexionsschicht (17) durch Einbringen einer Ausnehmung (20) in die Zusatzschicht (17),
- Aufbringen der Optikschicht (16) auf die Zusatzschicht (17),
- Hinterspritzen des zur Bildung der Dekorschicht (11) vorgesehenen Materials mittels Spritzgießen mit einem Trägermaterial zum Ausbilden des Trägers (12),
- Vorsehen wenigstens einer Lichtquelle (19) am oder im Formteil.

11. Verfahren nach Anspruch 10,
**dadurch gekennzeichnet, dass**
eine lichtstreuende und/oder lichtabsorbierende Zwischenschicht (18) auf die Vorderseite der Dekorlage (15) aufgebracht wird, bevor die Zusatzschicht (17) auf die Vorderseite der Dekorlage (15) und/oder der Zwischenschicht (18) aufgebracht wird.

12. Verfahren nach Anspruch 10 oder 11,
**dadurch gekennzeichnet, dass**
die Störstellen (20) derart angeordnet und/oder geformt werden, dass sie einem an der als Sichtseite ausgebildeten Vorderseite (14) der Dekorschicht (11) darzustellendem Symbol entsprechen.

13. Verfahren nach einem der Ansprüche 10 bis 12,
**dadurch gekennzeichnet,**
**dass** die Lichtquelle (19) seitlich an der Optikschicht (16) vorgesehen wird, oder
**dass** mindestens ein Lichtleiter vorgesehen wird, dessen eines Ende seitlich an der Optikschicht (16) endet und dessen anderes Ende an der Lichtquelle (19) endet, wobei die Lichtquelle (19) vorzugsweise an der Rückseite (22) des Trägers (12) vorgesehen wird.

## Claims

1. A molded part (10), in particular a decorative part or a lining or trim part, designed as a molded part for a vehicle interior, comprising a decorative layer (11) and a substrate (12) arranged on the back side (13) of the decorative layer (11), wherein the decorative layer (11) comprises a decorative sheet or coating (15) and a light-conducting optical layer (16) having a first refractive index,
wherein the optical layer (16) is arranged on a front side (14) of the decorative layer (11) that is designed as the visible side,
wherein at least one light source (19) is provided in or on the molded part (10) for illuminating and/or shining through the optical layer (16),
wherein the light source (19) is arranged so that light emitted by the light source (19) is input directly and/or indirectly into the optical layer (16) at the side,
**characterized in that**
a light-conducting additional layer (17) having a second refractive index is provided in the decorative layer (11) between the decorative sheet or coating (15) and the optical layer (16),
wherein the first refractive index of the optical layer (16) is greater than the second refractive index of the additional layer (17).

2. The molded part according to claim 1,
**characterized in that**
light scattering impurities (20) are provided in the additional layer (17) or between the optical layer (16) and the additional layer (17).

3. The molded part according to claim 1 [sic; 2?],
**characterized in that**
the impurities (20) are designed as continuous recesses in the additional layer (17).

4. The molded part according to claim 3,
**characterized in that**
the recesses are filled with the material of the optical layer.

5. The molded part according to any one of the preceding claims,
**characterized in that**
the additional layer (17) is or comprises a printed layer or a film or a paint layer.

6. The molded part according to any one of the preceding claims,
**characterized in that**
a light-scattering and/or a light-absorbing intermediate layer (18) is provided on the back side (21) of the additional layer (17).

7. The molded part according to any one of the preceding claims,
**characterized in that**
the impurities (20) are arranged and/or designed in such a way that their arrangement and/or shape correspond to a symbol to be represented on the front side (14) of the decorative layer (11) that is designed as the visible side.

8. The molded part according to any one of the preceding claims,
**characterized in that**
the light source (19) is provided at the side of the optical layer (16), or at least one light guide is provided, one end thereof ending at the side of the optical layer (16), and the other end thereof ending at the light source (19), wherein the light source (19) is preferably provided on the back side (22) of the substrate (12).

9. The molded part according to any one of the preceding claims,
**characterized in that**
the decorative sheet or coating (15) is or comprises a wood veneer or a film,
and/or
the optical layer (16) comprises PUR and/or PMMA and/or PC or is formed from PUR and/or PMMA and/or PC.

10. A method for manufacturing a molded part (10) according to any one of the preceding claims, comprising the steps:
- preparing a material that is provided for forming the decorative sheet or coating (15) of the decorative layer (11) of the molded part (10),
- applying the additional layer (17) to the front side of the decorative sheet or coating (15),
- providing at least one impurity (20) in the reflective layer (17) by introducing a recess (20) into the additional layer (17),
- applying the optical layer (16) to the additional layer (17),
- in-mold lamination of the material that is provided for forming the decorative layer (11) by means of injection molding of a substrate material behind the material to form the substrate (12),
- providing at least one light source (19) in or on the molded part.

11. The method according to claim 10,
**characterized in that**
a light-scattering and/or light-absorbing intermediate layer (18) is applied to the front side of the decorative sheet or coating (15) before the additional layer (17) is applied to the front side of the decorative sheet or coating (15) and/or the intermediate layer (18).

12. The method according to claim 10 or 11,
**characterized in that**
the impurities (20) are arranged and/or shaped in such a way that they correspond to a symbol to be represented on the front side (14) that is designed as the visible side of the decorative layer (11).

13. The method according to any one of claims 10 to 12,
**characterized in that**
the light source (19) is provided at the side of the optical layer (16), or at least one light guide is provided, one end thereof ending at the side of the optical layer (16), and the other end thereof ending at the light source (19), wherein the light source (19) is preferably provided on the back side (22) of the substrate (12).

## Revendications

1. Pièce moulée (10), en particulier une pièce décorative ou pièce d'habillage, réalisée sous forme de pièce moulée, pour un habitacle de véhicule, comprenant une couche décorative (11) et un support (12) disposé sur une face arrière (13) de la couche décorative (11), la couche décorative (11) comprenant une feuille décorative (15) et une couche optique de guidage de lumière (16) d'un premier indice de réfraction, dans laquelle la couche optique (16) est disposée sur une face avant (14) de la couche décorative (11), réalisée comme face d'aspect,
dans laquelle au moins une source de lumière (19) pour illuminer et/ou transilluminer la couche optique (16) est prévue sur ou dans la pièce moulée (10),
dans laquelle la source de lumière (19) est disposée de telle sorte que la lumière émanant de la source de lumière (19) est injectée directement et/ou indirectement sur le côté dans la couche optique (16), **caractérisée en ce que** dans la couche décorative (11), entre la feuille décorative (15) et la couche optique (16), de manière adjacente à la couche optique (16), une couche supplémentaire de guidage de lumière (17) d'un deuxième indice de réfraction est prévue,
le premier indice de réfraction de la couche optique (16) étant supérieur au deuxième indice de réfraction de la couche supplémentaire (17).

2. Pièce moulée selon la revendication 1, **caractérisée en ce que** des imperfections (20) dispersant la lumière sont prévues entre la couche optique (16) et la couche supplémentaire (17) ou dans la couche supplémentaire (17).

3. Pièce moulée selon la revendication 1, **caractérisée en ce que** les imperfections sont réalisées dans la couche supplémentaire (17) sous forme de creux traversants.

4. Pièce moulée selon la revendication 3, **caractérisée en ce que** les creux sont remplis avec le matériau de la couche optique.

5. Pièce moulée selon l'une quelconque des revendications précédentes, **caractérisée en ce que** la couche supplémentaire (17) est ou comprend une couche d'impression ou un film ou une couche de vernis.

6. Pièce moulée selon l'une quelconque des revendications précédentes, **caractérisée en ce que** sur la face arrière (21) de la couche supplémentaire (17), une couche intermédiaire (18) dispersant et/ou absorbant la lumière est prévue.

7. Pièce moulée selon l'une quelconque des revendications précédentes, **caractérisée en ce que** les imperfections (20) sont disposées et/ou réalisées de telle sorte que leur disposition et/ou leur forme correspond(ent) à un symbole à représenter sur la face avant (14) de la couche décorative (11), réalisée comme face d'aspect.

8. Pièce moulée selon l'une quelconque des revendications précédentes, **caractérisée en ce que**
la source de lumière (19) est prévue sur le côté de la couche optique (16), ou
au moins un guide de lumière est prévu dont une extrémité se termine sur le côté au niveau de la couche optique (16) et dont l'autre extrémité se termine au niveau de la source de lumière, la source de lumière (19) étant de préférence prévue sur la face arrière (22) du support (12).

9. Pièce moulée selon l'une quelconque des revendications précédentes, **caractérisée en ce que**
la feuille décorative (15) est ou comprend un placage de bois ou un film, et/ou
la couche optique (16) présente du PUR et/ou du PMMA et/ou du PC ou est formée en PUR et/ou en PMMA et/ou en PC.

10. Procédé de fabrication d'une pièce moulée (10) selon l'une quelconque des revendications précédentes, comprenant les étapes consistant à :
- fournir un matériau prévu pour former la feuille décorative (15) de la couche décorative (11) de la pièce moulée (11),
- appliquer la couche supplémentaire (17) sur la face avant de la feuille décorative (15),
- prévoir au moins une imperfection (20) dans la couche réfléchissante (17) en pratiquant un creux (20) dans la couche supplémentaire (17),
- appliquer la couche optique (16) sur la couche supplémentaire (17),
- contre-injecter le matériau prévu pour former la couche décorative (11) par moulage par injection avec un matériau de support pour réaliser le support (12),
- prévoir au moins une source de lumière 19 sur ou dans la pièce moulée.

11. Procédé selon la revendication 10, **caractérisé en ce qu'**une couche intermédiaire (18) dispersant et/ou absorbant la lumière est appliquée sur la face avant de la feuille décorative (15) avant l'application de la couche supplémentaire (17) sur la face avant de la feuille décorative (15) et/ou de la couche intermédiaire (18).

12. Procédé selon la revendication 10 ou 11, **caractérisé en ce que** les imperfections (20) sont disposées et/ou formées de telle sorte qu'elles correspondent à un symbole à représenter sur la face avant (14) de la couche décorative (11), réalisée comme face d'aspect.

13. Procédé selon l'une quelconque des revendications 10 à 12, **caractérisé en ce que**
la source de lumière (19) est prévue sur le côté de la couche optique (16), ou
au moins un guide de lumière est prévu dont une extrémité se termine sur le côté de la couche optique (16) et dont l'autre extrémité se termine au niveau de la source de lumière (19), la source de lumière (19) étant de préférence prévue sur la face arrière (22) du support (12).
